# EUROPÄISCHE PATENTSCHRIFT

(11) **EP 0 487 447 B1**
(45) Veröffentlichungstag und Bekanntmachung des Hinweises auf die Patenterteilung: **26.06.1996**
(21) Anmeldenummer: 91810762.4
(22) Anmeldetag: 27.09.1991
(51) Int. Cl.: B23K 35/32, B23K 35/30, B28D 1/26

(54) **Hartmetall. bzw. hartstoffbestückte Bohr-, Meissel-und Trennwerkzeuge**
Drilling, chiseling and cutting tools equipped with hard metal or hard material
Outils de coupe, de forage et de burinage equipés de metal dur ou de matériau dur

(30) Priorität: 17.11.1990 DE 4036777
(43) Veröffentlichungstag der Anmeldung: 27.05.1992
(73) Patentinhaber: HILTI Aktiengesellschaft, FL-9494 Schaan (LI)
(72) Erfinder: Batliner, Rainer, FL-9491 Schaanwald (LI); Stöck, Maximilian, CH-9478 Azmoos (CH)
(74) Vertreter: Wildi, Roland

(56) Entgegenhaltungen:
- EP-A- 0 360 438
- GB-A- 652 086
- GB-A- 1 268 917
- US-A- 4 685 359
- PATENT ABSTRACTS OF JAPAN vol. 13, no. 83 (M802) (3431) 27. Februar 1989 & JP-A-63 281 797 (HITACHI METALS LTD) 18. November 1988

## Beschreibung

Die Erfindung betrifft Lötverbindungen zwischen Hartstoff- bzw. Hartmetallteilen und einem Grundkörper aus Stahl. In grossem Umfang haben sich namentlich für die Gesteins- und Baustoffbearbeitung hartmetallbestückte Bohr-, Meissel- und Trennwerkzeuge durchgesetzt. Dazu werden, um die Standzeit der vorgenannten Werkzeuge zu erhöhen, im Bereich der Bohrer-bzw. Meisselspitze oder Schneidkante, Hartmetall- oder Hartstoffteile vorgesehen, welche sich durch einen äusserst geringen Verschleiss und hohe Belastbarbeit auszeichnen. Häufig wird so vorgegangen, dass ein Grundkörper aus mehr oder weniger legiertem Stahl mit einer Ausnehmung versehen wird, die der Aufnahme eines beispielsweise plättchenförmigen Hartmetall- oder Hartstoffteiles dient. Die Befestigung dieses Hartmetallteiles in der Ausnehmung des Grundkörpers erfolgt durch Verlöten.

Die in Bezug auf das Material inhomogene Ausgestaltung der Werkzeuge, zumal in dem hoch belasteten Bereich, stellt auch besondere Forderungen an die zum Verbinden der Hartmetallteile mit dem Grundkörper verwendeten Stoffe. Dies gilt umso mehr, als die Hartmetallteile regelmässig in axialer und/oder raidaler Richtung den Grundkörper des Bohr-, Meissel- und Trennwerkzeuges im Spitzenbereich überragen müssen. Trotz der formschlüssigen Einlagerung der Hartmetallteile in der entsprechenden Ausnehmung im Grundkörper treten unter Einsatzbedingungen innerhalb der Verbindung hohe und komplexe Beanspruchungen auf wie Druck-, Zug- und Scherspannungen. Das unterschiedliche Längenänderungsverhalten der zu verbindenden Teile verursacht zudem starke Abkühlspannungen in der Zone der Lötverbindung. So verhalten sich die Wärmedehnungskoeffizienten von Hartmetall und Trägerstählen etwa 1 : 3. Schädigungen der Lötverbindung können dabei nur dann vermieden werden, wenn das Lot nach dem Lötvorgang während der Abkühlung plastisch verformbar, duktil, ist. Da aber eine hohe Duktilität eine geringe Festigkeit bedeutet, ist dies für den praktischen Einsatz unerwünscht.

Hieraus resultieren die besonderen Bedingungen, die an das zum Verbinden der Hartmetalle mit dem Grundkörper verwendete Lot zu stellen sind. So muss das Lot duktil und imstande sein, das unterschiedliche Ausdehnungsverhalten von Hartmetall und Stahl (beim Abkühlvorgang) zu kompensieren. Gleichzeitig ist aber eine hohe Festigkeit des Lots gefordert, um die hohen dynamischen Beanspruchungen, die während des Betriebes der Werkzeuge entstehen, aufzunehmen.

Die Erfindung ist in den Ansprüchen 1 und 2 definiert.

Die Verwendung einer ausscheidungshärtbaren Legierung mit 20% Ni, 20% Mn und 60% Cu für den angegebenen Zweck ist bereits aus GB-A-1 268 917 bekannt.

Es wurde nunmehr gefunden, dass eine vorteilhafte Verbindung der Hartmetall- bzw. Hartstoffteile mit dem aus Stahl bestehenden Werkzeug-Grundkörper dann erreicht werden kann, wenn ein ausscheidungshärtbares Lot zum Verbinden der Teile verwendet wird.

Diese Lote zeichnen sich aus durch hohe Duktilität nach dem Abschrecken und hohe Festigkeit nach dem Aushärten. Dieses Verhalten entspricht den Erfordernissen zum Verbinden von Hartstoffen mit Stahl d.h. Duktilität beim Abschreckvorgang zur Kompensation der unterschiedlichen Längenänderung und höhere Festigkeit nach dem Aushärten zur Aufnahme der hohen Beanspruchung bei der Gesteins- bzw. Baustoffbearbeitung.

Als Lot haben sich dabei Kupferlegierungen bewährt. Bevorzugt werden Kupfer-Nickel-Silizium-Legierungen, insbesondere mit Nickelgehalten in Bereich von 1,0 bis 3 Gew.-% und Siliziumgehalten von 0,4 bis 1 Gew.-%. Aber auch Kupfer-Beryllium- und Kupfer-Beryllium-Legierungen zB mit 1,8 - 2,1 bzw. 0,4 - 0,7 Gew.-% Beryllium und 2,0 - 2,9 Gew.-% Kobalt, Kupfer-Zirkon- und Kupfer-Zirkon-Chrom-Legierungen zB mit Zirkongehalten von 0,1 - 0,3 bzw. 0,03 - 0,3 GEw.-% Zirkon und 0,3 - 1,2 Gew.-% Chrom und Kupfer-Titan-Legierungen mit bis zu 5 Gew.-% Titan, wobei jeweils, von üblichen Verunreinigungen abgesehen, der Restbestandteil von Kupfer gebildet wird, haben sich bewährt.

Beispiele von Legierungen sind:

| Legierung | Cu | Ti | Be | Co | Mn | Cr | Ni | Si | Zr |
|---|---|---|---|---|---|---|---|---|---|
| Cu Be 2 | Rest | | 1,8/2,1 | | | | | | |
| Cu Co 2 Be 2 | " | | 0,4/0,7 | 2,0/2,9 | | | | | |
| Cu Ni 2 Be | " | | 0,2/0,6 | | | | 1,4/2,0 | | |
| Cu Ni 1,5 Si | " | | | | | | 1,0/1,6 | 0,4/0,7 | |
| Cu Ni 2 Si | " | | | | 0/0,8 | | 1,6/2,5 | 0,5/0,8 | |
| Cu Cr Zr | " | | | | | 0,3/1,2 | | | 0,03/0,3 |
| Cu Zr | " | | | | | | | | 0,1/0,3 |
| Cu Ti | " | 1,0/5,0 | | | | | | | |

Erfindungsgemäss kann zur Herstellung der hartmetallbestückten Bohr- und Meisselwerkzeuge von einem ungehärteten oder gehärteten Werkzeug-Stahlgrundkörper ausgegangen werden. Wird von einem ungehärteten Stahlkörper ausgegangen, so werden der Lötvorgang und die Härtung des Stahls kombiniert (Löthärtung). Dies bedeutet, dass während der Lötung der Stahl gleichzeitig austenitisiert wird. Wegen der Härtung des Stahls wird rasch abgekühlt. Gleichzeitig wird durch den Lösungsglühvorgang das Lot in einen duktilen Zustand gebracht. Bei Verwendung des ausscheidungshärtbaren Lots können der Anlassvorgang des Stahls und die Ausscheidungshärtungsbehandlung miteinander kombiniert werden, da beide Vorgänge bei vergleichbaren Temperaturen und Zeiten stattfinden. Auch eine Ausscheidungshärtung in situ ist möglich. Wird von einem gehärteten Stahl martensitischen Gefüges ausgegangen, zB Induktivlöten gehärteter Werkzeugträger, auch dann, wenn der Stahl bereits einer Anlassbehandlung unterworfen war, so erfolgt wiederum ein Lösungsglühen während dem Lötvorgang und die Ausscheidungshärtung durch eine weitere Erwärmung auf entsprechende Temperaturen der Werkzeuge zu einem danach liegenden, beliebigen Zeitpunkt, spätestens beim Einsatz der Werkzeuge. Die erfindungsgemässen Bohr- und Meisselwerkzeuge sind also sowohl mit ungehärtetem als auch gehärtetem Stahl zugänglich, wobei der Ausscheidungshärtung der Lotverbindung dienende Massnahmen gegebenenfalls auch der Härtung des Werkzeug-Stahlkörpers dienen. Es kann in jedem Fall so vorgegangen werden, dass zunächst die Hartmetall- bzw. Hartstoffteile über das Lot mit dem Werkzeug-Grundkörper verlötet werden und, gegebenenfalls nach Abschrecken des gesamten Werkzeugs zur Härtung des Grundkörpers und dem (gleichzeitigen) Lösungsglühen des Lots, als gesonderte Stufe oder in situ ein Anlassvorgang sich anschliesst, der (gleichzeitig) die Ausscheidungshärtung bewirkt. Die Anlass- bzw. Ausscheidungshärtungstemperatur liegt dabei zB bei Temperaturen von über 250°C, insbesondere über 280°C, häufig im Bereich von etwa 300°C, wobei solche Lote bevorzugt sind, die beim Anlassen (Erwärmen) auf diesen Temperaturbereich unter Abkühlung ausscheidungshärtbar sind, wenn auch Aushärtungstemperaturen von bis etwa 450° oder darüber zulässig sind. Gegebenenfalls kann von dem Anlassvorgang Abstand genommen werden, da unter Arbeitsbedingungen, beispielsweise der Gesteinsbearbeitung, Anlass- bzw. Aushärtungstemperaturen erreicht werden.

Gegenstand der Erfindung sind auch hartmetallbestückte Bohr-und Meisselwerkzeuge, deren Hartmetallteile mit dem Grundkörper verlötet sind, wobei erfindungsgemäss die Hartmetallteile mit dem aus Stahl bestehenden Grundkörper durch ein ausscheidungsgehärtetes Lot verbunden sind.

### Beispiel 1

| | |
|---|---|
| Löten von Gesteinsbohrern | ⌀ 12 mm |
| Lot | Cu Ni 2 Si (2 % Ni, 0,65 % Si) |
| Hartmetall | WC mit 12 % Co |
| Stahlträger | 34 Cr Ni Mo 6 |
| Lötbedingungen | Feinvakuum, Löttemperatur 1100°C |
| | Abschreckung: Stickstoff 2 bar |
| | Lothärte HV1: 132 |
| Ausscheidungshärten | 280°C 1 Std. |
| | Lothärte HV1: 157 |

### Beispiel 2

| | |
|---|---|
| Löten von Stockerwerkzeugen | 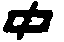 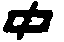 40 x 40 mm |
| Lot | Cu Ti 5 (5 % Ti) |
| Hartmetall | WC mit 12 % Co Stifte 0 5mm, 25 Stk |
| Stahlträger | 34 Cr Ni Mo 6 |
| Lötbedingungen | Hochvakuum, Löttemperatur 1050°C |
| | Abschreckung : Stickstoff 2 bar |
| | Lothärte HV 1: 240 |
| Ausscheidungshärten | 450°C 1 Std. |
| | Lothärte HV 1: 282 |

## Patentansprüche

1. Verwendung von ausscheidungshärtbaren Cu-Basislegierungen mit mindestens 95% Cu aus der Gruppe, Cu-Ni-Si-Legierungen, gegebenenfalls Co- und/oder Ni-enthaltenden Cu-Be-Legierungen, gegebenenfalls Cr-enthaltenden Cu-Zr-Legierungen sowie Cu-Ti-Legierungen als ausscheidungshärtbares Lot zur Lötverbindung von Hartmetall- bzw. Hartstoffteilen mit einem aus Stahl bestehenden Grundkörper, von vorzugsweise für die Baustoff- und Gesteinsbearbeitung bestimmten, Bohr-, Meißel- und Trennwerkzeugen.

2. Hartmetall- bzw. Hartstoff-bestückte Bohr- und Meißelwerkzeuge, wobei die Hartmetall- bzw. Hartstoffteile mit dem Grundkörperverlötet sind, **dadurch gekennzeichnet**, daß die Hartmetall- bzw. Hartstoffteile mit dem Grundkörper durch Cu-Basislegierungen mit mindestens 95% Cu aus der Gruppe Cu-Ni-Si-Legierungen, gegebenenfalls Co- und/oder Ni-enthaltende Cu-Be-Legierungen, gegebenenfalls Cr-enthaltende Cu-Zr- sowie Cu-Ti-Legierungen als ausscheidungsgehärtetem Lot verbunden sind.

## Claims

1. Use of artificially hardening Cu-based alloys with at least 95% Cu from the group of Cu-Ni-Si-alloys, if appropriate Cu-Be-alloys containing Co and/or Ni, if appropriate Cu-Zr-alloys containing Cr as well as Cu-Ti-alloys as artificially hardening solder for soldered jointing of hard metal or hard material parts with a base body of steel, of drilling, chiseling and cutting tools, preferably for processing construction materials and rocks.

2. Drilling and chiseling tools equipped with hard metal or hard material, and the hard metal or hard material parts are soldered to the base body, **characterized in that** the hard metal or hard material parts are connected to the base body by Cu-based alloys with at least 95% Cu from the group of Cu-Ni-Si alloys, if appropriate Cu-Be-alloys containing Co and/or Ni, if appropriate Cu-Zr- as well as Cu-Ti alloys containing Cr, as artificially hardening solder.

## Revendications

1. Utilisation d'alliages durcissables par précipitation,à base de cuivre avec au moins 95 % de Cu appartenant au groupe des alliages de Cu-Ni-Si, des alliages de Cu-Be contenant éventuellement du Co et/ou du Ni, des alliages de Cu-Zr contenant éventuellement du Cr, ainsi que des alliages de Cu-Ti, comme métal d'apport durcissable par précipitation pour le brasage d'éléments de métal dur ou de matériau dur sur un corps de base en acier d'outils de forage, de burinage et de coupe destinés de préférence au traitement des matériaux de construction et des roches.

2. Outils de forage et de burinage revêtus de métal dur ou de matériau dur, les éléments de métal dur ou de matériau dur étant brasés sur le corps de base, **caractérisés en ce** que les éléments de métal dur ou de matériau dur sont réunis au corps de base par des alliages à base de cuivre avec au moins 95 % de Cu appartenant au groupe des alliages de Cu-Ni-Si, des alliages de Cu-Be contenant éventuellement du Co et/ou du Ni, des alliages de Cu-Zr ainsi que de Cu-Ti contenant éventuellement du Cr, comme métal d'apport durci par précipitation.
